Europäisches Patentamt

European Patent Office

Office européen des brevets

(11) Veröffentlichungsnummer: **0 425 898 A1**

# (12) EUROPÄISCHE PATENTANMELDUNG

(21) Anmeldenummer: 90119920.8

(22) Anmeldetag: 17.10.90

(51) Int. Cl.5: **G01D 3/02**

(30) Priorität: 31.10.89 DE 3936560

(43) Veröffentlichungstag der Anmeldung:
08.05.91 Patentblatt 91/19

(84) Benannte Vertragsstaaten:
**AT BE CH DE ES FR GB IT LI SE**

(71) Anmelder: **Siemens Aktiengesellschaft**
**Wittelsbacherplatz 2**
**W-8000 München 2(DE)**

(72) Erfinder: **Wagner, Wolfgang, Dipl.-Ing. (FH)**
**Bürkmillerstrasse 9**
**W-8430 Neumarkt(DE)**
Erfinder: **Nicklis, Rainer, Dipl.-Ing. (FH)**
**Hauptstrasse 9**
**W-6741 Gleisweiler(DE)**
Erfinder: **Pfatteicher, Werner, Dipl.-Ing. (FH)**
**Rittnerstrasse 36**
**W-7507 Pfinztal(DE)**

(54) Verfahren zur Steuerung der Übermittlung von Messwerten eines Messfühlers an eine zentrale Steuereinheit mittels einer Ein-/Ausgabebaugruppe.

(57)
2.1. Bei der Eingabe von analogen Meßwerten wird eine zentrale Steuereinrichtung oft dadurch unnötig belastet, daß auch kleine Änderungen die Analogwerte zu neuen Eingaben führen.

2.2. Die zentrale Steuereinheit (1) wird dadurch entlastet, daß der analoge Meßwert nur dann von einer Eingabebaugruppe (2) an die zentrale Steuereinheit (1) weitergeleitet werden, wenn der Meßwert mindestens um ein definiertes Toleranzmaß von einem festgelegten Referenzwert abweicht.

2.3. Die Erfindung wird bei der Konstruktion von Ein-/Ausgabebaugruppen bei Automatisierungssystemen angewendet.

FIG 1

## VERFAHREN ZUR STEUERUNG DER ÜBERMITTLUNG VON MESSWERTEN EINES MESSFÜHLERS AN EINE ZENTRALE STEUEREINHEIT MITTELS EINER EIN-/AUSGABEBAUGRUPPE

Die Erfindung bezieht sich auf ein Verfahren zur Steuerung der Übermittlung von Meßwerten eines ersten, analog arbeitenden Meßfühlers an eine digitale Daten verarbeitende zentrale Steuereinheit mittels einer Ein-/Ausgabebaugruppe.

Bei der Automatisierung von Industrieanlagen werden Automatisierungssysteme eingesetzt, die unter anderem aus einer zentralen Steuereinheit und an diese angeschlossenen Ein-/Ausgabebaugruppen bestehen. In der zentralen Steuereinheit laufen alle für den zu steuernden Prozeß wichtigen Daten, bzw. Meßwerte ein und werden in digitaler Form weiterverarbeitet. Die Ein-/Ausgabebaugruppen dienen unter anderem dazu, die durch Meßfühler aufgenommenen Meßwerte vorzuverarbeiten und für die zentrale Steuereinheit aufzubereiten. Dadurch wird die zentrale Steuereinheit entlastet. Die Ein-/Ausgabebaugruppen verfügen für die Vorverarbeitung von Daten oft über eigene Mikrocomputer.

Oft trifft der Fall auf, daß an eine Ein-/Ausgabebaugruppe eine Eingabekomponente angeschlossen ist, die der Ein-/Ausgabebaugruppe Meßwerte in Form analoger Eingangswerte liefert. Eine solche Eingabekomponente kann beispielsweise ein Meßfühler, insbesondere ein Thermoelement oder ein lichtempfindlicher Widerstand sein. Die analogen Meßwerte schwanken normalerweise in bestimmten, von den Prozeßbedingungen und der Meßgenauigkeit des Meßfühlers abhängigen Grenzen. Es stellt unter Umständen für die zentrale Steuereinheit eine unnötige Belastung dar, wenn selbst kleinste Änderungen der analogen Meßwerte an sie weitergeleitet werden.

Der Erfindung liegt daher die Aufgabe zugrunde, die Übermittlung von Meßwerten eines Meßfühlers an die zentrale Steuereinheit mittels einer Ein-/Ausgabebaugruppe so zu organisieren, daß die zentrale Steuereinheit möglichst gering belastet wird.

Die Aufgabe wird erfindungsgemäß dadurch gelöst, daß die Meßwerte in analoger Form von dem ersten Meßfühler zu der Ein-/Ausgabebaugruppe geleitet und dort digitalisiert werden und daß die Ein-/Ausgabebaugruppe nur dann einen Meßwert an die zentrale Steuereinheit weiterleitet, wenn der Meßwert mindestens um ein definiertes Toleranzmaß von einem festgelegten Referenzwert abweicht.

Das erfindungsgemäße Verfahren hat den Vorteil, daß die zentrale Steuereinheit nur dann eine Meldung von dem ersten Meßfühler erhält, wenn der Meßwert über ein bestimmtes Toleranzmaß hinaus vom Referenzwert abweicht. Dadurch wird die zentrale Steuereinheit und auch der Datenbus entlastet.

Der Vergleich des Meßwertes mit dem Referenzwert kann entweder vor der Digitalisierung des Meßwertes in analoger Form durch eine Analogrechenschaltung oder nach der Digitalisierung in digitaler Form erfolgen.

Daß erfindungsgemäße Verfahren wird vor allem dann vorteilhaft eingesetzt, wenn der entsprechende Meßwert voraussichtlich nur um sehr geringe Beträge schwankt. Das Toleranzmaß, um das der erfaßte Meßwert schwanken darf, ohne daß die Ein-/Ausgabebaugruppe eine Änderung des Meßwertes an die zentrale Steuereinheit meldet, kann vom Anwender beispielsweise auf 3 %, 5 % oder 10 % des Referenzwertes festgelegt werden. Es ist auch möglich, das Toleranzmaß nicht in relativen Einheiten, sondern in absoluten Schwankungen vorzugeben.

Bei Inbetriebnahme des Automatisierungssystems kann der Referenzwert für das erfindungsgemäße Verfahren durch den Benutzer festgelegt werden. Eine Änderung des Meßwertes, die zu einer Abweichung von dem Referenzmaß über das Toleranzmaß hinaus führt, initiiert einen Prozeßalarm mittels eines Interruptsignals an die zentrale Steuereinheit. Die Steuereinheit leitet daraufhin bestimmte festgelegte Schritte zur Fortführung des zu steuernden Prozesses ein. Diese können beispielsweise darin bestehen, daß die zentrale Steuereinheit anstelle des übermittelten Meßwertes zur weiteren Berechnung der Prozeßdaten einen Ersatzwert zugrundelegt. Es kann auch vorgesehen sein, daß die zentrale Steuereinheit Maßnahmen trifft, um die Prozeßbedingungen zu ändern oder, daß anstelle des ersten Meßfühlers ein weiterer Meßfühler angesteuert wird, um die Meßwerte zu überprüfen.

Das erfindungsgemäße Verfahren kann vorteilhaft so ausgestaltet werden, daß als Referenzwert der Inhalt eines dem ersten Meßfühler zugeordneten Meßwertregisters verwendet wird und daß bei einer das Toleranzmaß übersteigenden Abweichung des vom ersten Meßfühler registierten Meßwertes vom Referenzwert der Inhalt des Meßwertregisters aktualisiert wird.

Eine solche Ausgestaltung des Verfahrens ist z. B. dann vorteilhaft, wenn ein Meßwert zur Prozeßsteuerung abgefragt wird, der sich langsam, aber stetig ändert, wobei kurzfristige starke Schwankungen des Meßwertes zu einem Prozeßalarm führen sollen. Es ist z. B. denkbar, daß eine langsame Abkühlung eines größeren Körpers über einen Temperatursensor überwacht werden soll.

Dabei kann es wünschenswert sein, daß die Temperatur langsam aber stetig sinkt. Wird ein Toleranzmaß von 5°C gewählt, so meldet die entsprechende Ein-/Ausgabebaugruppe in bestimmten Abständen ein Absinken der Temperatur um jeweils 5°C und aktualisiert jeweils den Referenzwert auf den neuen Temperaturwert. Die zentrale Prozeßeinheit überprüft dann jeweils, ob eine genügend lange Zeitspanne seit der letzten Meldung des Temperatursensors vergangen ist. Stellt sich heraus, daß es sich um einen plötzlich beschleunigten Temperaturabfall handelt, so gibt die zentrale Steuereinheit über eine Ein-/Ausgabebaugruppe Signale an ein Heizaggregat, das dann für eine Verlangsamung des Temperaturabfalls sorgt. Auf diese Weise wird die zentrale Steuereinheit so selten wie möglich mit der Verarbeitung von Temperaturdaten befaßt. Die Steuereinheit bleibt daher für die Erfassung von anderen Prozeßdaten, wie z. B. der Luftfeuchtigkeit in der Umgebung des abzukühlenden Körpers frei.

Eine weitere Ausgestaltung des Verfahrens sieht vor, daß als Referenzwert der Inhalt eines Meßwertregisters eines zweiten Meßfühlers verwendet wird.

Diese Gestaltung des Verfahrens kann vorteilhaft dann verwendet werden, wenn nur die Differenz zweier gleichzeitig oder zeitversetzt aufgenommener Meßwerte für die Steuerung eines Prozesses wichtig ist. Beispielsweise können bei der Überwachung des Abkühlungsvorganges eines größeren Körpers zwei Temperaturmeßfühler an verschiedenen Punkten des Körpers angebracht sein, wobei dem zweiten Temperaturmeßfühler ein Meßwertregister zugeordnet ist. Der Inhalt des Meßwertregisters wird laufend durch die von dem zweiten Meßfühler registrierten Meßergebnisse aktualisiert. Unter Umständen ist es für die Steuerung des Abkühlprozesses nur wichtig, einen größeren Temperaturunterschied zwischen den beiden Meßpunkten der Temperaturfühler zu vermeiden. In diesem Fall wird als Referenzwert der Inhalt des Meßwertregisters des zweiten Meßfühlers verwendet und die Ein-/Ausgabebaugruppe, an der die beiden Meßfühler angeschlossen sind, leitet nur dann Informationen an die zentrale Steuereinheit weiter, wenn die von dem ersten Meßfühler registierte Temperatur über ein bestimmtes, vom Anwender festsetzbares Toleranzmaß von der durch den zweiten Meßfühler registrierten Temperatur abweicht.

Die Erfindung wird im folgenden anhand eines Ausführungsbeispiels in einer Zeichnung gezeigt und anschließend beschrieben.

Dabei zeigt:

Figur 1: Schematisch das Automatisierungssystem,

Figur 2: die Ein-/Ausgabebaugruppe, in der die Vorverarbeitung der Meßwerte vor der Übermittlung an die zentrale Steuereinheit stattfindet.

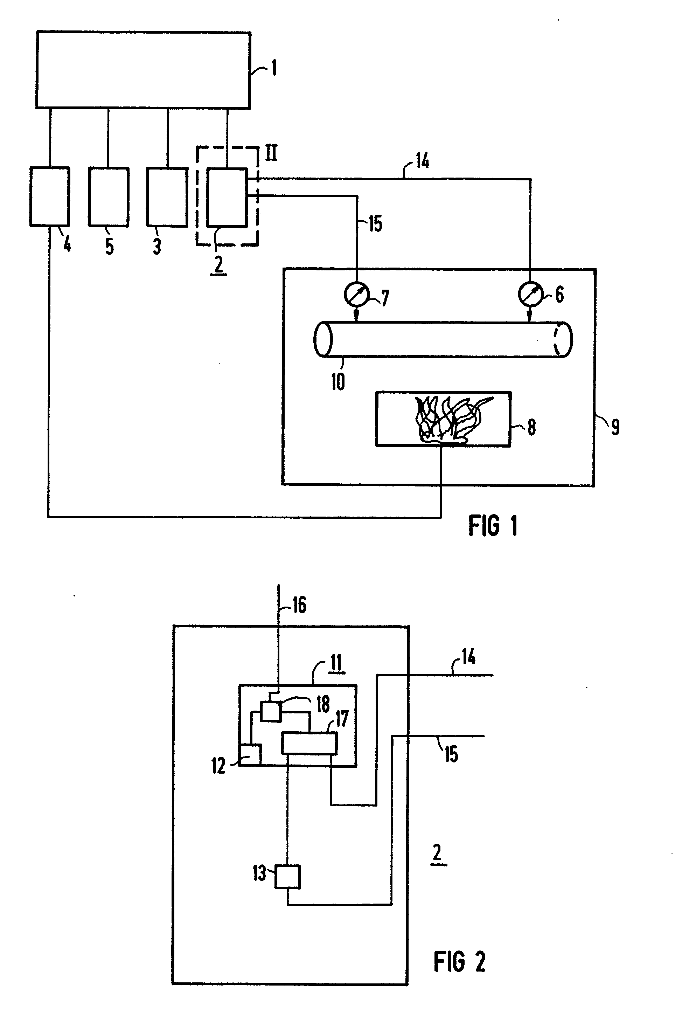

Figur 1 zeigt die zentrale Steuereinheit 1, an die vier Ein-/Ausgabebaugruppen 2, 3, 4, 5 angeschlossen sind. Die Eingabebaugruppen 2, 3 dienen der Eingabe von Daten in die zentrale Steuereinheit 1, die Ausgabebaugruppen 4, 5 dienen der Ausgabe von Daten aus der zentralen Steuereinheit 1. Die Ein-/Ausgabebaugruppen 2, 3, 4, 5 sind mit der zentralen Steuereinheit 1 über einen Datenbus und einen Adressbus verbunden. Das Bussystem enthält auch Energieversorgungsleitungen.

Das Automatisierungssystem wird dazu eingesetzt, die gleichmäßige Abkühlung eines Körpers 10 zu steuern. Es soll gewährleistet werden, daß die Temperaturunterschiede an zwei Stellen des Körpers 10 beim Abkühlen ein gewisses wählbares Toleranzmaß nicht übersteigen. Zu diesem Zweck sind an zwei verschiedenen Stellen des Körpers 10 ein erster Meßfühler 6 sowie ein zweiter Meßfühler 7 angebracht. Die Meßfühler liefern analoge Temperaturmeßwerte an die Eingabebaugruppe 2. Die Daten werden in der Eingabebaugruppe 2 vorverarbeitet und unter bestimmten Bedingungen (vgl. Beschreibung zu Fig. 2) an die zentrale Steuereinheit 1 weitergeleitet. Diese steuert eine Ausgabebaugruppe 4 an, durch die dann das Heizaggregat 8 gesteuert wird. Die Steuerung des Heizaggregates 8 erlaubt eine ungleichmäßige Verteilung der Heizleistung auf den Körper 10, so daß lokale Temperaturunterschiede zwischen den Punkten, an denen die Meßfühler 6, 7 angebracht sind, ausgeglichen werden können.

Figur 2 zeigt schematisch in detaillierter Form den Aufbau der Eingabebaugruppe 2. Die Eingabebaugruppe 2 besitzt zwei Dateneingänge 14, 15, die die Daten von den Meßfühlern 6, 7 führen und einen Ausgang 16, der die Eingabebaugruppe 2 mit der zentralen Steuereinheit 1 verbindet. Bei der Projektierung des Automatisierungssystems kann der Anwender im Dialog mit der zentralen Steuereinheit 1 das Toleranzmaß festlegen, um das der Meßwert des Meßfühlers 6 von dem Referenzwert abweichen darf, bis daß die Eingabebaugruppe 2 eine Überschreitung des Toleranzmaßes an die zentrale Steuereinheit 1 meldet. Dieses Toleranzmaß wird im Toleranzmaßregister 12 der Eingabebaugruppe 2 abgelegt. Die Meßwerte des zweiten Meßfühlers 7 werden über die Datenleitung 15 an die Eingabebaugruppe 2 und innerhalb der Eingabebaugruppe 2 an das Meßwertregister 13 gegeben. Dort wird der jeweils aktuelle Meßwert gespeichert. Die Entscheidungseinheit 11 innerhalb der Eingabebaugruppe 2 vergleicht laufend den Meßwert des ersten Meßfühlers 6, der ihr über die Datenleitung 14 zugeführt wird, mit dem Inhalt des Meßwertregisters 13. Innerhalb des Entscheidungsbausteins 11 wird in dem Differenzbildungsbaustein 17 die Differenz zwischen dem aktuellen Meßwert des ersten Meßfühleres 6 und dem Inhalt des Meßwertregisters 13 des zweiten Meßfühlers 7 gebildet. Dieser Differenzwert wird dem Vergleichsbaustein 18 zugeleitet, ebenso wie der Inhalt des Toleranzmaßregisters 12. In diesem Vergleichsbaustein 18 wird der Differenzwert mit dem Inhalt des Toleranzmaßregisters 12 verglichen. Nur, wenn der Differenzwert größer ist als das Toleranzmaß, wird ein Interruptsignal über die Datenleitung 16 an die zentrale Steuereinheit 1 geleitet. Daraufhin trifft die zentrale Steuereinheit 1 Maßnahmen gegen ein zu großes Temperaturungleichgewicht zwischen den beiden Punkten des Körpers 10, an denen die Meßfühler 6, 7 angebracht sind, und gibt entsprechende Befehle an die Ausgabebaugruppe 4, die ihrerseits das Heizaggregat 8 in geeigneter Weise ansteuert.

## Ansprüche

1. Verfahren zur Steuerung der Übermittlung von Meßwerten eines ersten, analog arbeitenden Meßfühlers an eine digitale Daten verarbeitende zentrale Steuereinheit mittels einer Ein-/Ausgabebaugruppe,
**daduch gekennzeichnet,** daß
die Meßwerte in analoger Form von dem ersten Meßfühler (6) zu der Ein-/Ausgabebaugruppe (2) geleitet und dort digitalisiert werden und daß die Ein-/Ausgabebaugruppe (2) nur dann einen Meßwert an die zentrale Steuereinheit (1) weiterleitet, wenn der Meßwert mindestens um ein definiertes Toleranzmaß von einem festgelegten Referenzwert abweicht.

2. Verfahren nach Anspruch 1,
**dadurch gekennzeichnet,** daß
als Referenzwert der Inhalt eines dem ersten Meßfühler (6) zugeordneten Meßwertregisters verwendet wird und daß bei einer das Toleranzmaß übersteigenden Abweichung des vom ersten Meßfühler (6) registerten Meßwertes vom Referenzwert der Inhalt des Meßwertregisters aktualisiert wird.

3. Verfahren nach Anspruch 1,
**dadurch gekennzeichnet,** daß
als Referenzwert der Inhalt eines Meßwertregisters (13) eines zweiten Meßfühlers (7) verwendet wird.

FIG 1

FIG 2

Europäisches
Patentamt

**EUROPÄISCHER
RECHERCHENBERICHT**

Nummer der Anmeldung

**EP 90 11 9920**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 271 230 (ACCURAY CORP.)<br>* Spalte 6, Zeile 49 - Spalte 7, Zeile 42; Ansprüche 2,3; Figur 1 *<br>— — — | 1 | G 01 D<br>3/02 |
| Y | PATENT ABSTRACTS OF JAPAN, Band 7, Nr. 176 (P-214)[1321], 4. August 1983;<br>& JP-A-58 80 565 (MITSUBISHI DENKI K.K.) 14-05-1983<br>— — — — — | 1 | |

**RECHERCHIERTE SACHGEBIETE (Int. Cl.5)**

G 01 D
G 05 B

Der vorliegende Recherchenbericht wurde für alle Patentansprüche erstellt

| Recherchenort | Abschlußdatum der Recherche | Prüfer |
|---|---|---|
| Den Haag | 01 Februar 91 | CHAPPLE I.D. |